# EUROPEAN PATENT APPLICATION

(11) **EP 3 352 251 A1**
(43) Date of publication of application: **25.07.2018**
(21) Application number: 18151810.1
(22) Date of filing: 16.01.2018
(51) Int. Cl.: H01M 4/04, H01M 4/134, H01M 4/1395, H01M 4/36, H01M 4/38, H01M 4/62, H01M 10/052, H01M 2/02, H01M 4/02

(54) **METHOD FOR PREPARING SILICON-CARBON COMPOSITE, NEGATIVE ELECTRODE, AND LITHIUM ION BATTERY**

(30) Priority: 19.01.2017 CN 201710039430
(71) Applicant: Optimum Battery Co., Ltd., Shenzhen City, Guangdong 518118 (CN)
(72) Inventor: RONG, Liang bin, Shenzhen, Guangdong 518118 (CN); RAO, Mu min, Shenzhen, Guangdong 518118 (CN); Li, Yao, Shenzhen, Guangdong 518118 (CN)
(74) Representative: Greaves Brewster LLP

(57) **Abstract**

The present application provides a method for preparing silicon-carbon composite. The silicon-carbon composite prepared according to the present application is suitable to be an active material for negative electrode of lithium ion battery, which could not only ensure high capacity of silicon but also have good cycle performance and good charge and discharge performance. The present application also provides a negative electrode comprising a copper foil and a slurry including the mixture of a conductive agent, a binder, solvents and the silicon-carbon composite prepared according to the method for preparing silicon-carbon composite of the present application; and a lithium ion battery comprising a shell, a winding core positioned in the shell, electrolyte received in the shell and immersing the winding core, wherein the winding core comprising a positive electrode, separators and the negative electrode provided according to the present application.

## Description

### BACKGROUND OF THE INVENTION

### Field of the Invention

The present application generally relates to lithium ion batteries and, more particularly, to a method for preparing silicon-carbon composite, a negative electrode, and a lithium ion battery.

### Description of the Related Art

At present, lithium ion batteries have been widely used as energy storage systems in 3C digital, electric vehicle and other fields. Lithium ion batteries are required to have high energy density, good cycle performance and safety performance, and low cost. A traditional active material for negative electrode of a lithium ion battery is graphite, however, the theoretical capacity of graphite is 372mAh/g, resulting in a low energy density of the lithium ion battery, which is difficult to meet the current requirements.

Compared with graphite, silicon has a higher lithium insertion capacity (about 3600mAh/g at room temperature) and a lower lithium insertion potential (<0.5V), which make silicon to be the most potential active material for negative electrode of lithium ion battery to replace graphite. However, silicon has a large volume change in process of taking off or embedding the lithium, resulting in problems of disintegration of silicon particles, poor contact between active material and negative current collector, and repetitive growth of unstable solid electrolyte interphase which may cause the consumption of electrolyte, and low charge and discharge efficiency and poor cycle performance of the lithium ion battery.

Conventional preparation and modification methods of silicon based materials, such as thermal reduction method, carbon coating method and chemical vapor deposition method, are facing problems of agglomeration of nano-particles, uneven distribution, and large volume expansion of silicon-carbon product which may cause poor cycle performance of lithium ion battery.

In view of the foregoing, what is needed, therefore, is to provide a method for preparing silicon-carbon composite, a negative electrode, and a lithium ion battery to overcome the defects as mentioned above.

### SUMMARY OF THE INVENTION

One object of the present application is to provide a method for preparing silicon-carbon composite. The silicon-carbon composite prepared according to the present application is suitable to be an active material for negative electrode of lithium ion battery, which could not only ensure high capacity of silicon but also have good cycle performance and good charge and discharge performance.

According to one embodiment of the present application, a method for preparing silicon-carbon composite comprising steps of:
1) dispersing a silicon source and a carbon source in water at a molar ratio of Si:C=(5-15):1, and obtaining a silicon-carbon suspension;
2) heating the silicon-carbon suspension of step 1) and the silicon-carbon suspension reacting at 180-220°C for 3-8 hours, cooling down to room temperature, washing and drying, and obtaining a carbon coated nano-silicon based oxide;
3) mixing and grinding the carbon coated nano-silicon based oxide of step 2) with magnesium powders, and obtaining a mixture;
4) adding the mixture of step 3) into inorganic salt and heating at 400-700°C for 5-15 hours under protection of an inert gas, and obtaining a precursor; and
5) washing the precursor by hydrochloric acid and deionized water, soaking by hydrofluoric acid, and then washing by deionized water and drying, and obtaining a silicon-carbon composite.

The silicon-carbon composite prepared according to the present application has characteristics of uniform particles, excellent electrochemical property, and rapid in process of taking off or embedding of electrons and lithium ions.

One embodiment of the present application provides a negative electrode comprising a copper foil and a slurry including the mixture of a conductive agent, a binder, solvents and the silicon-carbon composite prepared according to the method for preparing silicon-carbon composite of the present application; the slurry is coated on two opposite surfaces of the copper foil.

The negative electrode provided according to the present application has good chemical stability and controllable volume change.

One embodiment of the present application provides a lithium ion battery comprising a shell having an opening at one end, a winding core positioned in the shell, electrolyte received in the shell and immersing the winding core, and a cap cover positioned in the opening for enclosing the opening; wherein the winding core comprising a positive electrode, separators and the negative electrode provided according to the present application.

The lithium ion battery provided according to the present application has high energy density, good cycle performance and good charge and discharge performance.

### BRIEF DESCRIPTION OF THE DRAWINGS

FIG. 1 depicts a schematic view of a negative electrode provided according to the present application;
FIG. 2 depicts a schematic view of a lithium ion battery provided according to the present application;
FIG. 3 depicts XRD pattern of silicon-carbon composite prepared according to Example 2 of the present application;
FIG. 4 depicts SEM image of the silicon-carbon composite prepared according to Example 2 of the present application;
FIG. 5 depicts 0.1C charge and discharge diagrams of the lithium ion battery provided according to Example 2 of the present application; and
FIG. 6 depicts 0.1C cycle diagrams of the lithium ion battery provided according to Example 2 of the present application.

### DETAILED DESCRIPTION OF THE PREFERRED EMBODIMENTS

In order that the objects, technical solution and technical effects of the present application can be understood more clearly, the present application will be described in more detail with reference to the accompanying drawings and examples. It should be understood that the specific examples described herein are illustrative only and are not intended to limit the present application.

According to one embodiment of the present application, a method for preparing silicon-carbon composite comprising steps of:
1) dispersing a silicon source and a carbon source in water at a molar ratio of Si:C=(5-15):1, and obtaining a silicon-carbon suspension;
2) heating the silicon-carbon suspension of step 1) and the silicon-carbon suspension reacting at 180-220°C for 3-8 hours, cooling down to room temperature, washing and drying, and obtaining a carbon coated nano-silicon based oxide;
3) mixing and grinding the carbon coated nano-silicon based oxide of step 2) with magnesium powders, and obtaining a mixture;
4) adding the mixture of step 3) into inorganic salt and heating at 400-700°C for 5-15 hours under protection of an inert gas, and obtaining a precursor; and
5) washing the precursor by hydrochloric acid and deionized water, soaking by hydrofluoric acid, and then washing by deionized water and drying, and obtaining a silicon-carbon composite.

Specifically, in step 1), the silicon source is SiO or SiO₂.

Specifically, in step 1), the silicon source has a particle size of 50-200nm.

Specifically, in step 1), the silicon source and the carbon source are separately dispersed in water to obtain a silicon source suspension and a carbon source suspension, and then the silicon source suspension and the carbon source suspension are mixed to obtain the silicon-carbon suspension.

Specifically, in step 1), a concentration of the carbon source suspension is 0.1-1mol/L while the carbon source is selected from a group consisting of glucose, sucrose, citric acid and maleic acid.

Specifically, in step 1), a solid content of the carbon source suspension is 0.3-5% while the carbon source is graphene.

Specifically, in step 3), a mass ratio of the carbon coated nano-silicon based oxide to the magnesium powders is 1:(0.6-1.6)

Specifically, in step 4), the inorganic salt is selected from a group consisting of anhydrous sodium chloride, anhydrous potassium chloride, anhydrous aluminum chloride and anhydrous magnesium chloride.

Specifically, in step 4), a mass ratio of the mixture to the inorganic salt is 1:(10-20).

Specifically, in step 4), the inert gas is selected from a group consisting of nitrogen, neon, argon, krypton, xenon and radon.

Specifically, in step 4), a rate of temperature rising from room temperature to 400-700°C is 3-5°C/min.

The silicon-carbon composite prepared according to the present application is suitable to be an active material for negative electrode of lithium ion battery, which could not only ensure high capacity of silicon but also have good cycle performance and good charge and discharge performance.

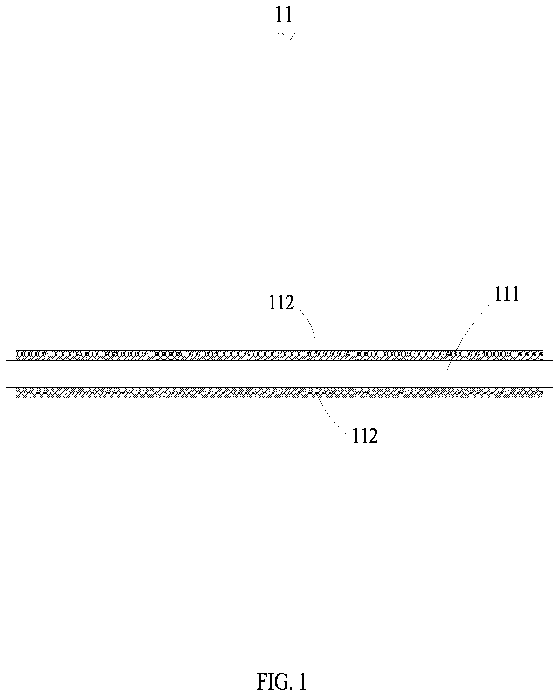

Referring to FIG. 1, one embodiment of the present application provides a negative electrode 11 comprising a copper foil 111 and a slurry 112 including the mixture of a conductive agent, a binder, solvents and the silicon-carbon composite prepared according to the method for preparing silicon-carbon composite of the present application; the slurry 112 is coated on two opposite surfaces of the copper foil 111.

The negative electrode 11 comprising the silicon-carbon composite prepared according to the present application may have good chemical stability and controllable volume change.

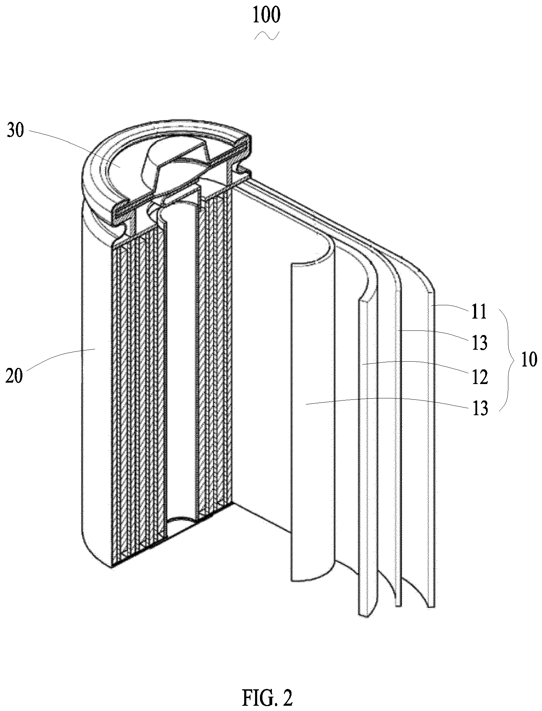

Referring to FIG. 2, one embodiment of the present application provides a lithium ion battery 100 comprising a shell 20 having an opening at one end, a winding core 10 positioned in the shell 20, electrolyte received in the shell 20 and immersing the winding core 10, and a cap cover 30 positioned in the opening for enclosing the opening; wherein the winding core 10 comprising a positive electrode 12, separators 13 and the negative electrode 11 provided according to the present application.

The lithium ion battery 100 comprising the negative electrode 11 may have high energy density, good cycle performance and good charge and discharge performance.

### Example 1:

1. dispersing 5g SiO₂ in 40mL deionized water and mixing with 1.51g aqueous solution of glucose to obtain a silicon-carbon suspension, wherein a concentration of the aqueous solution of glucose is 0.1-1mol/L, and SiO₂ and glucose are mixed in a molar ratio of Si:C=(5-15):1;
2. heating the silicon-carbon suspension in a water-bath heater and the silicon-carbon suspension reacting at 180 °C for 4 hours, cooling down to room temperature, washing by deionized water and drying in a vacuum oven to obtain a carbon coated SiO₂;
3. mixing and grinding the carbon coated SiO₂ and magnesium powders in a mass ratio of 1:0.88 to obtain a mixture;
4. adding the mixture into inorganic salt comprising anhydrous sodium chloride and anhydrous potassium chloride, and heating at 700 °C for 10 hours under the protection of an inert gas to obtain a precursor, wherein a mass ratio of the mixture to the inorganic salt is 1.88:20, a mass ratio of the sodium chloride to the anhydrous potassium chloride is 1:1 and a rate of temperature rising from room temperature to 700°C is 3°C/min;
5. washing the precursor by hydrochloric acid and deionized water, soaking by hydrofluoric acid, and then washing by deionized water and drying in the vacuum oven to obtain a silicon-carbon composite;
6. mixing the silicon-carbon composite, a conductive agent, a binder and solvents to form a slurry 112 and coating the slurry 112 on two opposite surfaces of a copper foil 111 to obtain a negative electrode 11;
7. winding the negative electrode 11, a positive electrode 12 and separators 13 into a winding core 10 and sealing the winding core 10 into a shell 20 after injecting electrolyte to obtain a lithium ion battery 100.

### Example 2:

1. dispersing 5g SiO₂ in 40mL deionized water and mixing with 1.70g aqueous solution of glucose to obtain a silicon-carbon suspension, wherein a concentration of the aqueous solution of glucose is 0.1-1mol/L, and SiO₂ and glucose are mixed in a molar ratio of Si:C=(5-15):1;
2. heating the silicon-carbon suspension in a water-bath heater and the silicon-carbon suspension reacting at 190°C for 6 hours, cooling down to room temperature, washing by deionized water and drying in a vacuum oven to obtain a carbon coated SiO₂;
3. mixing and grinding the carbon coated SiO₂ and magnesium powders in a mass ratio of 1:0.84 to obtain a mixture;
4. adding the mixture into inorganic salt comprising anhydrous sodium chloride and anhydrous magnesium chloride, and heating at 650 °C for 8 hours under the protection of an inert gas to obtain a precursor, wherein a mass ratio of the mixture to the inorganic salt is 1.84:20, a mass ratio of the sodium chloride to the anhydrous magnesium chloride is 1:1.23 and a rate of temperature rising from room temperature to 650°C is 3°C/min;
5. washing the precursor by hydrochloric acid and deionized water, soaking by hydrofluoric acid, and then washing by deionized water and drying in the vacuum oven to obtain a silicon-carbon composite;
6. mixing the silicon-carbon composite, a conductive agent, a binder and solvents to form a slurry 112 and coating the slurry 112 on two opposite surfaces of a copper foil 111 to obtain a negative electrode 11;
7. winding the negative electrode 11, a positive electrode 12 and separators 13 into a winding core 10 and sealing the winding core 10 into a shell 20 after injecting electrolyte to obtain a lithium ion battery 100.

### Example 3:

1. dispersing 5g SiO₂ in 40mL deionized water and mixing with 1.95g aqueous solution of glucose to obtain a silicon-carbon suspension, wherein a concentration of the aqueous solution of glucose is 0.1-1mol/L, and SiO₂ and glucose are mixed in a molar ratio of Si:C=(5-15):1;
2. heating the silicon-carbon suspension in a water-bath heater and the silicon-carbon suspension reacting at 200 °C for 5 hours, cooling down to room temperature, washing by deionized water and drying in a vacuum oven to obtain a carbon coated SiO₂;
3. mixing and grinding the carbon coated SiO₂ and magnesium powders in a mass ratio of 1:1 to obtain a mixture;
4. adding the mixture into inorganic salt comprising anhydrous sodium chloride and anhydrous aluminum chloride, and heating at 550°C for 10 hours under the protection of an inert gas to obtain a precursor, wherein a mass ratio of the mixture to the inorganic salt is 2:20, a mass ratio of the sodium chloride to the anhydrous aluminum chloride is 1:2.79 and a rate of temperature rising from room temperature to 550°C is 5°C/min;
5. washing the precursor by hydrochloric acid and deionized water, soaking by hydrofluoric acid, and then washing by deionized water and drying in the vacuum oven to obtain a silicon-carbon composite;
6. mixing the silicon-carbon composite, a conductive agent, a binder and solvents to form a slurry 112 and coating the slurry 112 on two opposite surfaces of a copper foil 111 to obtain a negative electrode 11;
7. winding the negative electrode 11, a positive electrode 12 and separators 13 into a winding core 10 and sealing the winding core 10 into a shell 20 after injecting electrolyte to obtain a lithium ion battery 100.

### Example 4:

1. dispersing 5g SiO₂ in 40mL deionized water and mixing with 2.27g aqueous solution of glucose to obtain a silicon-carbon suspension, wherein a concentration of the aqueous solution of glucose is 0.1-1mol/L, and SiO₂ and glucose are mixed in a molar ratio of Si:C=(5-15):1;
2. heating the silicon-carbon suspension in a water-bath heater and the silicon-carbon suspension reacting at 200 °C for 6 hours, cooling down to room temperature, washing by deionized water and drying in a vacuum oven to obtain a carbon coated SiO₂;
3. mixing and grinding the carbon coated SiO₂ and magnesium powders in a mass ratio of 1:0.84 to obtain a mixture;
4. adding the mixture into inorganic salt comprising anhydrous sodium chloride and anhydrous magnesium chloride, and heating at 650°C for 10 hours under the protection of an inert gas to obtain a precursor, wherein a mass ratio of the mixture to the inorganic salt is 1.84:20, a mass ratio of the sodium chloride to the anhydrous magnesium chloride is 1:1.23 and a rate of temperature rising from room temperature to 650°C is 3°C/min;
5. washing the precursor by hydrochloric acid and deionized water, soaking by hydrofluoric acid, and then washing by deionized water and drying in the vacuum oven to obtain a silicon-carbon composite;
6. mixing the silicon-carbon composite, a conductive agent, a binder and solvents to form a slurry 112 and coating the slurry 112 on two opposite surfaces of a copper foil 111 to obtain a negative electrode 11;
7. winding the negative electrode 11, a positive electrode 12 and separators 13 into a winding core 10 and sealing the winding core 10 into a shell 20 after injecting electrolyte to obtain a lithium ion battery 100.

Discharge capacity in the first charge and discharge cycle, coulomb efficiency in the first charge and discharge cycle, and coulomb efficiency after one hundred charge and discharge cycles of lithium ion batteries provided according to the examples of the present application are shown in the following table.

| | Discharge capacity in the first cycle (mAh/g) | Coulomb efficiency in the first cycle (%) | Coulomb efficiency after one hundred cycles (%) |
|---|---|---|---|
| Example 1 | 2100 | 70.45 | 70.36 |
| Example 2 | 2056 | 73.43 | 79.04 |
| Example 3 | 1740 | 85.67 | 82.34 |
| Example 4 | 1465 | 89.38 | 88.65 |

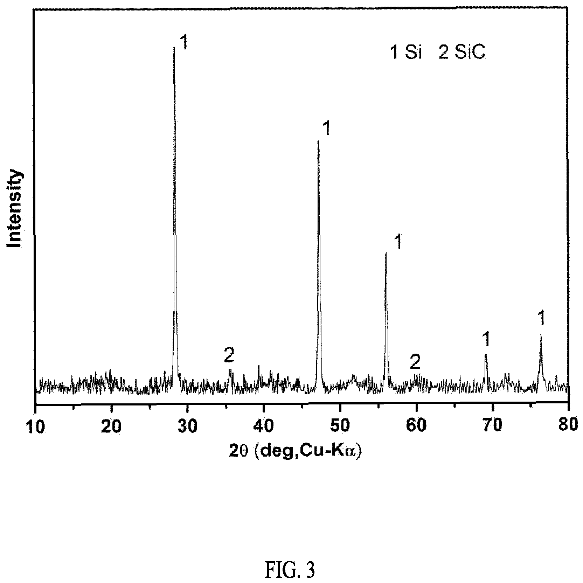

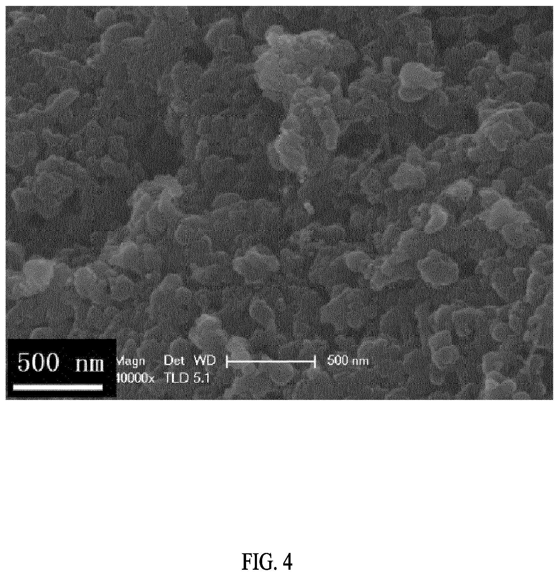

Referring to FIG. 3 and FIG. 4, the silicon-carbon composite prepared according to the present application has uniform particles and gap channels beneficial to the taking off or embedding process of electrons and lithium ions.

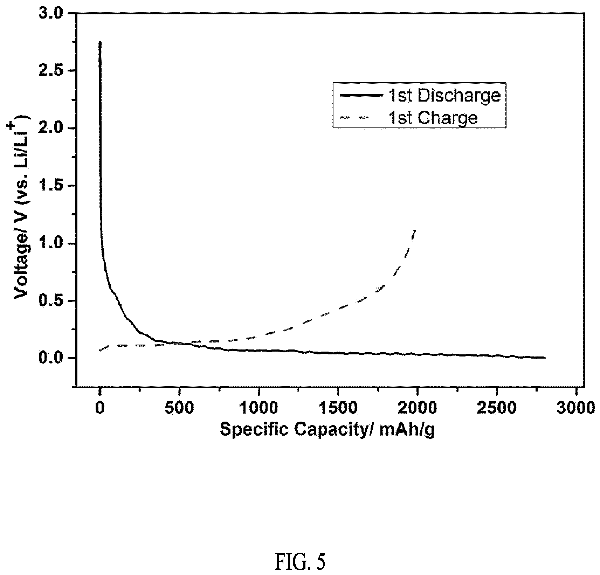

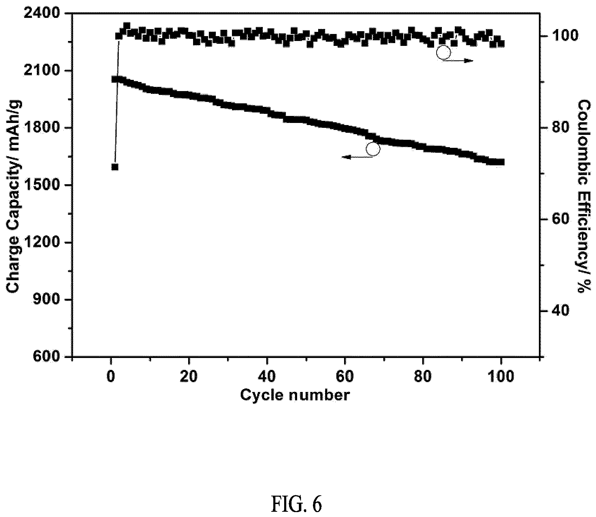

Referring to FIG. 5 and FIG. 6, the lithium ion battery provided according to the present application has good charge and discharge performance and good cycle performance. The discharge capacity of the lithium ion battery in the first charge and discharge cycle could reach 2800mAh/g, the charge capacity after one hundred charge and discharge cycles remains 1600mAh/g, and the coulomb efficiency within one hundred charge and discharge cycles remains around 100%.

It should be understood that the above examples are only used to illustrate the technical concept and feature of the present application, and the purpose to thereof is familiarize the person skilled in the art to understand the content of the present application and carry it out, which cannot restrict the protection scope of the present invention based on above. Any equivalent transformation or modification made in the spirit of the present invention should all be included within the protection scope of the present application.

## Claims

1. A method for preparing silicon-carbon composite, comprising steps of:
1) dispersing a silicon source and a carbon source in water at a molar ratio of Si:C=(5-15):1, and obtaining a silicon-carbon suspension;
2) heating the silicon-carbon suspension of step 1) and the silicon-carbon suspension reacting at 180-220°C for 3-8 hours, cooling down to room temperature, washing and drying, and obtaining a carbon coated nano-silicon based oxide;
3) mixing and grinding the carbon coated nano-silicon based oxide of step 2) with magnesium powders, and obtaining a mixture;
4) adding the mixture of step 3) into inorganic salt and heating at 400-700°C for 5-15 hours under protection of an inert gas, and obtaining a precursor; and
5) washing the precursor by hydrochloric acid and deionized water, soaking by hydrofluoric acid, and then washing by deionized water and drying, and obtaining a silicon-carbon composite.

2. The method for preparing silicon-carbon composite according to claim 1, wherein the silicon source of step 1) is SiO or SiO₂.

3. The method for preparing silicon-carbon composite according to claim 1, wherein the silicon source of step 1) has a particle size of 50-200nm.

4. The method for preparing silicon-carbon composite according to claim 1, wherein the silicon source and the carbon source of step 1) are separately dispersed in water to obtain a silicon source suspension and a carbon source suspension, and then the silicon source suspension and the carbon source suspension are mixed to obtain the silicon-carbon suspension.

5. The method for preparing silicon-carbon composite according to claim 4, wherein the carbon source is selected from a group consisting of glucose, sucrose, citric acid and maleic acid.

6. The method for preparing silicon-carbon composite according to claim 5, wherein a concentration of the carbon source suspension is 0.1-1mol/L.

7. The method for preparing silicon-carbon composite according to claim 4, wherein the carbon source is graphene and a solid content of the carbon source suspension made of graphene is 0.3-5%.

8. The method for preparing silicon-carbon composite according to claim 1, wherein a mass ratio of the carbon coated nano-silicon based oxide to the magnesium powders of step 3) is 1:(0.6-1.6).

9. The method for preparing silicon-carbon composite according to claim 1, wherein the inorganic salt of step 4) is selected from a group consisting of anhydrous sodium chloride, anhydrous potassium chloride, anhydrous aluminum chloride and anhydrous magnesium chloride.

10. The method for preparing silicon-carbon composite according to claim 1, wherein a mass ratio of the mixture to the inorganic salt of step 4) is 1:(10-20).

11. The method for preparing silicon-carbon composite according to claim 1, wherein the inert gas of step 4) is selected from a group consisting of nitrogen, neon, argon, krypton, xenon and radon.

12. The method for preparing silicon-carbon composite according to claim 1, wherein a rate of temperature rising from room temperature to 400-700 °C is 3-5°C/min.

13. A negative electrode (11), comprising a copper foil (111) and a slurry (112) including the mixture of a conductive agent, a binder, solvents and the silicon-carbon composite prepared according to claim 1; the slurry (112) is coated on two opposite surfaces of the copper foil (111).

14. A lithium ion battery (100), comprising a shell (20) having an opening at one end, a winding core (10) positioned in the shell (20), electrolyte received in the shell (20) and immersing the winding core (10), and a cap cover (30) positioned in the opening for enclosing the opening; wherein the winding core (10) comprising a positive electrode (12), separators (13) and the negative electrode (11) of claim 13.
